# EUROPEAN PATENT APPLICATION

(11) **EP 2 183 969 A2**
(43) Date of publication of application: **12.05.2010**
(21) Application number: 08167816.1
(22) Date of filing: 29.10.2008
(51) Int. Cl.: A01N 29/02, A01N 37/06, A01N 37/46, A01N 43/16, A01N 47/24, A01C 1/06, A01P 15/00, A01N 51/00

(54) **Method for increasing the number of seedlings per number of sowed grains of seed**

(71) Applicant: BASF SE, 67056 Ludwigshafen (DE)
(72) Inventor: Lindholm, Don, Craig, Durham, North Carolina 27713 (US); Pagani, Maria, Cristina, Raleigh, NC 27606 (US); Charvat, Leo, D., Lincoln, Nebraska 68523 (US); Ypema, Hendrik, Leonard, Cary, NC 27519 (US); Newsom, Larry, J., Holly Springs, NC 27540 (US); Liberator, Kelly, Raleigh, North Carolina 27617 (US)

(57) **Abstract**

The present invention relates to a method for increasing the number of seedlings per number of sowed grains of seed comprising
a) treating seed with a pesticide and an aqueous compositions comprising a polymer selected from vinylidene chloride copolymer or chitosan; and
b) drying said treated seed.

The present invention further relates to the use of a polymer selected from vinylidene chloride copolymer or chitosan for increasing the number of seedlings per number of sowed grains of seed, wherein the seed has been treated with a pesticide.

## Description

The present invention relates to a method for increasing the number of seedlings per number of sowed grains of seed comprising
a) treating seed with a pesticide and an aqueous compositions comprising a polymer selected from vinylidene chloride copolymer or chitosan; and
b) drying said treated seed.
   The present invention further relates to the use of a polymer selected from vinylidene chloride copolymer or chitosan for increasing the number of seedlings per number of sowed grains of seed, wherein the seed has been treated with a pesticide.

Combinations of preferred embodiments with other preferred embodiments are within the scope of the present invention.

US 3,803,761 disclosed seed coated with a vinylidene copolymer. The tailored seed coating permitted optimum germination and growth while allowing early planting.

GB 1,070,804 disclosed a method for seed treatment comprising a germination retarding coating. The coating included polyvinylidene chloride polymers.

Reddy et al. (J. Agric. Food Chem. 1999, 47, 1208-1216) disclosed that chitosan treatment of wheat seeds improved seed germination.

EP 0 878 129 B1 disclosed an aqueous composition for enhancing resistance to plant diseases comprising chitosan, an organic acid and a biologically active substance selected from the group consisting of natural or synthetic plant hormone, unsaturated fatty acid, ammonium salt of N-vinyl pyrrolidone/crotonic acid copolymer, phenolic acid or inorganic salt. Said aqueous coating was also applied to seed.

It is an object of the present invention find a method to increase the number of seedlings per number of sowed grains of seed under normal conditions and under stress conditions (e.g. cold temperature, aging, chilling injury, fungi infection, mechanical damage).

The object was achieved by a method for increasing the number of seedlings per number of sowed grains of seed comprising
a) treating seed with a pesticide and an aqueous compositions comprising a polymer selected from vinylidene chloride copolymer or chitosan; and
b) drying said treated seed.

The term seed embraces seeds and plant propagules of all kinds including but not limited to true seeds, seed pieces, suckers, corms, bulbs, fruit, tubers, grains, cuttings, cut shoots and the like and means in a preferred embodiment true seeds. Suitable seed is seed of cereals, root crops, oil crops, vegetables, spices, ornamentals, for example seed of durum and other wheat, barley, oats, rye, maize (fodder maize and sugar maize / sweet and field corn), soybeans, oil crops, crucifers, cotton, sunflowers, bananas, rice, oilseed rape, turnip rape, sugarbeet, fodder beet, eggplants, potatoes, grass, lawn, turf, fodder grass, tomatoes, leeks, pumpkin/squash, cabbage, iceberg lettuce, pepper, cucumbers, melons, Brassica species, melons, beans, peas, garlic, onions, carrots, tuberous plants such as potatoes, sugar cane, tobacco, grapes, petunias, geranium/pelargoniums, pansies and impatiens. Preferred seed is seed of maize or soybean.

In addition, suitable seed is seed from genetically modified plants. Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.
Seed of plants are also covered that have been modified by breeding, mutagenesis or genetic engineering, e. g. have been rendered tolerant to applications of specific classes of herbicides, such as hydroxyphenylpyruvate dioxygenase (HPPD) inhibitors; acetolactate synthase (ALS) inhibitors, such as sulfonyl ureas (see e. g. US 6,222,100,
WO 01/82685, WO 00/26390, WO 97/41218, WO 98/02526, WO 98/02527,
WO 04/106529, WO 05/20673, WO 03/14357, WO 03/13225, WO 03/14356,
WO 04/16073) or imidazolinones (see e. g. US 6,222,100, WO 01/82685,
WO 00/026390, WO 97/41218, WO 98/002526, WO 98/02527, WO 04/106529,
WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.) and LibertyLink® (glufosinate-tolerant, Bayer CropScience, Germany).
Furthermore, Seed of plants are also covered that are by the use of recombinant DNA techniques capable to synthesize one or more insecticidal proteins, especially those known from the bacterial genus Bacillus, particularly from Bacillus thuringiensis, such as δ-endotoxins, e. g. CryIA(b), CryIA(c), CryIF, CryIF(a2), CryIIA(b), CryIIIA, Cry-IIIB(b1) or Cry9c; vegetative insecticidal proteins (VIP), e. g. VIP1, VIP2, VIP3 or VIP3A; insecticidal proteins of bacteria colonizing nematodes, e. g. Photorhabdus spp. or Xenorhabdus spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieIdGard® (corn cultivars producing the Cry1Ab toxin), YieIdGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).
Furthermore, seed of plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g.
EP-A 392 225), plant disease resistance genes (e. g. potato cultivars, which express resistance genes acting against Phytophthora infestans derived from the mexican wild potato Solanum bulbocastanum) or T4-lysozym (e. g. potato cultivars capable of synthesizing these proteins with increased resistance against bacteria such as Erwinia amylvora). The methods for producing such genetically modified plants are generally known to the person skilled in the art and are described, e. g. in the publications mentioned above.
Furthermore, seed of plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.
Furthermore, seed of plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).
Furthermore, seed of plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The number of seedlings per number of sowed grains of seed can be determined by manual counting the number of grains of seed, which are sown, and manual counting the number of resulting seedlings. The seedlings may be evaluated according to the "International Rules for Seed Testing" published by the International Seed Testing Association. Said number may be increased compared to seed which was not treated with the method according to the present invention, preferably compared to seed which was treated with a pesticide, but not a vinylidene chloride copolymer or chitosan, or with vinylidene chloride copolymer or chitosan, but not a pesticide.

The number of seedlings per number of sowed grains of seed may be increased under various germination conditions. An expert is familier with suitable germination conditions. Preferred examples are a standard germination test (at 25 °C for eight days), a saturated cold test type A (at 10 °C for seven days, followed by four days at 25 °C), a saturated cold test type B (utilizes excess of irrigation to provide a saturated soil/towel media (100 % water holding capacity WHC) condition throughout the test; seven days at 10 °C followed by 72 h at 25 °C), or accelerated aging test (seed is aged at 43 °C for 72 h prior to planting at 25 °C for seven days).

The term "pesticide" within the meaning of the invention states that one or more compounds can be selected from the group consisting of fungicides, insecticides, nematicides, herbicide, preferably from the group consisting of fungicides or insecticides, more preferably from fungicides. Preferred pesticides are organic synthetic pesticides, which are made of carbon and hydrogen, and optionally heteroatoms, such as oxygen, sulfur, halogen and / or phosphorous. The organic synthetic pesticides are prepared by a directed chemical synthesis from other chemicals. Also mixtures of pesticides of two or more the aforementioned classes can be used. The skilled artisan is familiar with such pesticides, which can be, for example, found in the Pesticide Manual, 13th Ed. (2003), The British Crop Protection Council, London. The following list of pesticides is intended to illustrate the possible combinations, but not to impose any limitation:

The fungicide can be selected from the group consisting of
A) strobilurins
   azoxystrobin, dimoxystrobin, enestroburin, fluoxastrobin, kresoxim-methyl, metominostrobin, orysastrobin, picoxystrobin, pyraclostrobin, pyribencarb, trifloxystrobin, 2-(2-(6-(3-chloro-2-methyl-phenoxy)-5-fluoro-pyrimidin-4-yloxy)-phenyl)-2-methoxyimino-N-methyl-acetamide, 3-methoxy-2-(2-(N-(4-methoxy-phenyl)-cyclopropane-carboximidoylsulfanylmethyl)-phenyl)-acrylic acid methyl ester, methyl (2-chloro-5-[1-(3-methylbenzyloxyimino)ethyl]benzyl)carbamate and 2-(2-(3-(2,6-dichlorophenyl)-1-methyl-allylideneaminooxymethyl)-phenyl)-2-methoxyimino-N-methyl-acetamide;
B) carboxamides
   - carboxanilides: benalaxyl, benalaxyl-M, benodanil, bixafen, boscalid, carboxin, fenfuram, fenhexamid, flutolanil, furametpyr, isopyrazam, isotianil, kiralaxyl, mepronil, metalaxyl, metalaxyl-M (mefenoxam), ofurace, oxadixyl, oxycarboxin, penthiopyrad, tecloftalam, thifluzamide, tiadinil, 2-amino-4-methyl-thiazole-5-carboxanilide, 2-chloro-N-(1,1,3-trimethyl-indan-4-yl)-nicotinamide, N-(2',4'-difluorobiphenyl-2-yl)-3-difluoromethyl-1-methyl-1H-pyrazole-4-carboxamide, N-(2',4'-dichlorobiphenyl-2-yl)-3-difluoromethyl-1-methyl-1H-pyrazole-4-carboxamide, N-(2',5'-difluorobiphenyl-2-yl)-3-difluoromethyl-1-methyl-1H-pyrazole-4-carboxamide, N-(2',5'-dichlorobiphenyl-2-yl)-3-difluoromethyl-1-methyl-1H-pyrazole-4-carboxamide, N-(3',5'-difluorobiphenyl-2-yl)-3-difluoromethyl-1-methyl-1H-pyrazole-4-carboxamide, N-(3'-fluorobiphenyl-2-yl)-3-difluoromethyl-1-methyl-1H-pyrazole-4-carboxamide, N-(3'-chlorobiphenyl-2-yl)-3-difluoromethyl-1-methyl-1H-pyrazole-4-carboxamide, N-(2'-fluorobiphenyl-2-yl)-3-difluoromethyl-1-methyl-1H-pyrazole-4-carboxamide, N-(2'-chlorobiphenyl-2-yl)-3-difluoromethyl-1-methyl-1H-pyrazole-4-carboxamide, N-(3',5'-dichlorobiphenyl-2-yl)-3-difluoromethyl-1-methyl-1H-pyrazole-4-carboxamide, N-(3',4',5'-trifluorobiphenyl-2-yl)-3-difluoromethyl-1-methyl-1H-pyrazole-4-carboxamide, N-(2',4',5'-trifluorobiphenyl-2-yl)-3-difluoromethyl-1-methyl-1H-pyrazole-4-carboxamide, N-[2-(1,1,2,3,3,3-hexafluoropropoxy)-phenyl]-3-difluoromethyl-1-methyl-1H-pyrazole-4-carboxamide, N-[2-(1,1,2,2-tetrafluoroethoxy)-phenyl]-3-difluoromethyl-1-methyl-1H-pyrazole-4-carboxamide, N-(4'-trifluoromethylthiobiphenyl-2-yl)-3-difluoromethyl-1-methyl-1H-pyrazole-4-carboxamide, N-(2-(1,3-dimethyl-butyl)-phenyl)-1,3-dimethyl-5-fluoro-1H-pyrazole-4-carboxamide, N-(2-(1,3,3-trimethyl-butyl)-phenyl)-1,3-dimethyl-5-fluoro-1H-pyrazole-4-carboxamide, N-(4'-chloro-3',5'-difluoro-biphenyl-2-yl)-3-difluoromethyl-1-methyl-1H-pyrazole-4-carboxamide, N-(4'-chloro-3',5'-difluoro-biphenyl-2-yl)-3-trifluoromethyl-1-methyl-1H-pyrazole-4-carboxamide, N-(3',4'-dichloro-5'-fluoro-biphenyl-2-yl)-3-trifluoromethyl-1-methyl-1H-pyrazole-4-carboxamide, N-(3',5'-difluoro-4'-methylbiphenyl-2-yl)-3-difluoromethyl-1-methyl-1H-pyrazole-4-carboxamide, N-(3',5'-difluoro-4'-methyl-biphenyl-2-yl)-3-trifluoromethyl-1-methyl-1H-pyrazole-4-carboxamide, N-(2-bicyclopropyl-2-yl-phenyl)-3-difluoromethyl-1-methyl-1H-pyrazole-4-carboxamide, N-(cis-2-bicyclopropyl-2-yl-phenyl)-3-difluoromethyl-1-methyl-1H-pyrazole-4-carboxamide, N-(trans-2-bicyclopropyl-2-yl-phenyl)-3-difluoromethyl-1-methyl-1H-pyrazole-4-carboxamide, N-[1,2,3,4-tetrahydro-9-(1-methylethyl)-1,4-methanonaphthalen-5-yl]-3-(difluoromethyl)-1-methyl-1H-pyrazole-4-carboxamide;
   - carboxylic morpholides: dimethomorph, flumorph;
   - benzoic acid amides: flumetover, fluopicolde, fluopyram;
   - other carboxamides: carpropamid, dicyclomet, mandiproamid, oxytetracyclin, silthiofarm and N-(6-methoxy-pyridin-3-yl) cyclopropanecarboxylic acid amide;
C) azoles
   - triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-(4-chloro-phenyl)-2-([1,2,4]triazol-1-yl)-cycloheptanol;
   - imidazoles: cyazofamid, imazalil, pefurazoate, prochloraz, triflumizol;
   - benzimidazoles: benomyl, carbendazim, fuberidazole, thiabendazole;
   - others: ethaboxam, etridiazole, hymexazole and 2-(4-chloro-phenyl)-N-[4-(3,4-dimethoxy-phenyl)-isoxazol-5-yl]-2-prop-2-ynyloxy-acetamide;
D) heterocyclic compounds
   - pyridines: fluazinam, pyrifenox, 3-[5-(4-chloro-phenyl)-2,3-dimethyl-isoxazolidin-3-yl]-pyridine, 3-[5-(4-methyl-phenyl)-2,3-dimethyl-isoxazolidin-3-yl]-pyridine, 2,3,5,6-tetra-chloro-4-methanesulfonyl-pyridine, 3,4,5-trichloropyridine-2,6-di-carbonitrile, N-(1-(5-bromo-3-chloro-pyridin-2-yl)-ethyl)-2,4-dichloronicotinamide, N-[(5-bromo-3-chloro-pyridin-2-yl)-methyl]-2,4-dichloro-nicotinamide;
   - pyrimidines: bupirimate, cyprodinil, diflumetorim, fenarimol, ferimzone, mepanipyrim, nitrapyrin, nuarimol, pyrimethanil;
   - piperazines: triforine;
   - pyrroles: fenpiclonil, fludioxonil;
   - morpholines: aldimorph, dodemorph, dodemorph-acetate, fenpropimorph, tridemorph;
   - piperidines: fenpropidin;
   - dicarboximides: fluoroimid, iprodione, procymidone, vinclozolin;
   - non-aromatic 5-membered heterocycles: famoxadone, fenamidone, octhilinone, probenazole, 5-amino-2-isopropyl-3-oxo-4-ortho-tolyl-2,3-dihydro-pyrazole-1-carbothioic acid S-allyl ester;
   - others: acibenzolar-S-methyl, amisulbrom, anilazin, blasticidin-S, captafol, captan, chinomethionat, dazomet, debacarb, diclomezine, difenzoquat, difenzoquat-methylsulfate, fenoxanil, Folpet, oxolinic acid, piperalin, proquinazid, pyroquilon, quinoxyfen, triazoxide, tricyclazole, 2-butoxy-6-iodo-3-propylchromen-4-one, 5-chloro-1-(4,6-dimethoxy-pyrimidin-2-yl)-2-methyl-1H-benzoimidazole, 5-chloro-7-(4-methylpiperidin-1-yl)-6-(2,4,6-trifluorophenyl)-[1,2,4]triazolo[1,5-a]pyrimidine, 6-(3,4-dichloro-phenyl)-5-methyl-[1,2,4]triazolo[1,5-a]pyrimidine-7-ylamine, 6-(4-tert-butylphenyl)-5-methyl-[1,2,4]triazolo[1,5-a]pyrimidine-7-ylamine, 5-methyl-6-(3,5,5-trimethyl-hexyl)-[1,2,4]triazolo[1,5-a]pyrimidine-7-ylamine, 5-methyl-6-octyl-[1,2,4]triazolo[1,5-a]pyrimidine-7-ylamine, 6-methyl-5-octyl-[1,2,4]triazolo[1,5-a]pyrimidine-7-ylamine, 6-ethyl-5-octyl-[1,2,4]triazolo[1,5-a]pyrimidine-7-ylamine, 5-ethyl-6-octyl-[1,2,4]triazolo[1,5-a]pyrimidine-7-ylamine, 5-ethyl-6-(3,5,5-trimethyl-hexyl)-[1,2,4]triazolo[1,5-a]pyrimidine-7-ylamine, 6-octyl-5-propyl-[1,2,4]triazolo[1,5-a]pyrimidine-7-ylamine, 5-methoxymethyl-6-octyl-[1,2,4]triazolo[1,5-a]pyrimidine-7-ylamine, 6-octyl-5-trifluoromethyl-[1,2,4]triazolo[1,5-a]pyrimidine-7-ylamine and 5-trifluoromethyl-6-(3,5,5-trimethyl-hexyl)-[1,2,4]triazolo[1,5-a]pyrimidine-7-ylamine;
E) carbamates
   - thio- and dithiocarbamates: ferbam, mancozeb, maneb, metam, methasulphocarb, metiram, propineb, thiram, zineb, ziram;
   - carbamates: benthiavalicarb, diethofencarb, flubenthiavalicarb, iprovalicarb, propamocarb, propamocarb hydrochlorid, valiphenal and N-(1-(1-(4-cyano-phenyl)-ethanesulfonyl)-but-2-yl) carbamic acid-(4-fluorophenyl) ester;
F) other active substances
   - guanidines: guanidine, dodine, dodine free base, guazatine, guazatine-acetate, iminoctadine, iminoctadine-triacetate, iminoctadine-tris(albesilate);
   - antibiotics: kasugamycin, kasugamycin hydrochloride-hydrate, streptomycin, polyoxine, validamycin A;
   - nitrophenyl derivates: binapacryl, dinobuton, dinocap, nitrthal-isopropyl, tecnazen, organometal compounds: fentin salts, such as fentin-acetate, fentin chloride or fentin hydroxide;
   - sulfur-containing heterocyclyl compounds: dithianon, isoprothiolane;
   - organophosphorus compounds: edifenphos, fosetyl, fosetyl-aluminum, iprobenfos, pyrazophos, tolclofos-methyl;
   - organochlorine compounds: chlorothalonil, dichlofluanid, dichlorophen, flusulfamide, hexachlorobenzene, pencycuron, pentachlorphenole and its salts, phthalide, quintozene, thiophanate-methyl, tolylfluanid, N-(4-chloro-2-nitro-phenyl)-N-ethyl-4-methylbenzenesulfonamide;
   - others: biphenyl, bronopol, cyflufenamid, cymoxanil, diphenylamin, metrafenone, mildiomycin, prohexadione-calcium, spiroxamine, tolylfluanid, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethylphenyl)-N-ethyl-N-methyl formamidine, N'-(2-methyl-5-trifluoromethyl-4-(3-trimethylsilanyl-propoxy)-phenyl)-N-ethyl-N-methyl formamidine and N'-(5-difluoromethyl-2-methyl-4-(3-trimethylsilanyl-propoxy)-phenyl)-N-ethyl-N-methyl formamidine.

The herbicide can be selected from the group consisting of
- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propylimidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bromacil, bromobutide, butafenacil, butamifos, cafenstrole, carfentrazone, cinidon-ethlyl, chlorthal, cinmethylin, clomazone, cumyluron, cyprosulfamide, dicamba, difenzoquat, diflufenzopyr, endothal, ethofumesate, etobenzanid, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, 4-hydroxy-3-[2-(2-methoxy-ethoxymethyl)-6-trifluoromethylpyridine-3-carbonyl]-bicyclo[3.2.1]oct-3-en-2-one, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.

The insecticide can be selected from the group consisting of
- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, imidacloprid, thiamethoxam, nitenpyram, acetamiprid, thiacloprid, 1-(2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- others: benclothiaz, bifenazate, cartap, flonicamid, pyridalyl, pymetrozine, thiocyclam, flubendiamide, chlorantraniliprole, cyazypyr (HGW86), cyenopyrafen, flupyrazofos, cyflumetofen, amidoflumet, imicyafos, bistrifluron, and pyrifluquinazon.

Preferred insecticides are GABA antagonist compounds and nicotinic receptor agonists/antagonists compounds. In another embodiment, preferred insecticides are acetamiprid, alpha-cypermethrin, clothianidin, fipronil, imidacloprid, spinosad, tefluthrin, thiamethoxam and metaflumizon. Especially preferred insecticides are fipronil and imidacloprid.

Preferred fungicides are strobilurins, carboxamides, azoles and organochlorine compounds. In another preferred embodiment the fungicides metalaxyl, pyrimethanil, epoxiconazole, fluquiconazole, flutriafol, hymexazole, imazalil, metconazole, prochloraz, prothioconazole, tebuconazole, triticonazole, iprodion, metiram, thiram, boscalid, carbendazim, silthiofam, fludioxonil, azoxystrobin, kresoxim-methyl, orysastrobin, pyraclostrobin, trifloxystrobin, thiophante methyl and triticonazol are preferred. Especially preferred fungicides are metalaxyl, boscalid, pyraclostrobin, thiophante methyl and triticonazol.

Especially preferred pesticides are pyraclostrobin, thiophanate-methyl, metalaxyl, boscalid, triticonazol, imidachloprid and fipronil.

The polymer may be a vinylidene chloride copolymer. The vinylidene chloride monomer is also known as 1,1-dichlororethylene or Dichloroethene. Vinylidene chloride copolymers and their preparation are well known (Vandendael, Y., Ullmann's Encyclopedia of Industrial Chemistry, 2005, entry "Poly(vinylidene chloride"). Usually, said copolymer comprises at least 30 wt%, preferable at least 40 and more preferably at least 50 wt% vinylidene chloride monomer based on the total amount of monomers. Examples for comonomers are vinyl chloride, acrylic acid, alkyl acrylate, methacrylic acid, alkyl methacrylate, vinyl acetate, propylene, ethylene, styrene and/or acrylonitrile. Preferably, the comomers are vinyl chloride, acrylic acid, alkyl acrylate, methacrylic acid and/or alkyl methacrylate. More preferably, the comonomers are vinyl chloride, acrylic acid, methyl acrylate, methacrylic acid and/or methyl methacrylate. Most preferably, the comonomers are vinyl chloride and/or methyl acrylate. Various vinylidene chloride copolymers are commercially available, e.g. under the trade names of Diofan® or Ixan® from Solvin S.A.. The vinylidene chloride copolymers are usually prepared by emulsion polymerization. The resulting aqueous emulsion of vinylidene chloride copolymer have in general a dry content of 40 to 60 wt%, preferably 45 to 55 wt %.

The polymer may be chitosan. Chitosan is a well known polysaccharide (Hirano, Ullmann's Encyclopedia of Industrial Chemistry, 2005, entry "Chitin and Chitosan"). The term "chitosan" encloses chitosan and chitosan derivatives, preferably only chitosan. Chitosan relates to linear β-(1→4)-linked glucosamin and N-acetylglucosamin. It may be produced from chitin or its sodium salt by treatment with aqueous sodium hydroxide at elevated temperatures or with enzymes. Depending on the reaction conditions highly N-deacetylated or partially N-deacetylated chitosan is made. Typically, the deacetylation as determined by colloidal titraion is from 50 to 99.9 %, preferably from 70 to 99.8 % and most preferably from 90 to 99.7 %. The viscosity is usually also related to deacetylation. Typically, the viscosity of a 1 wt% chitosan solution in 1 wt% acetic acid (determined by Brookfield viscosimetry at 25 °C with a spindle at 30 rpm) is from 5 to 500 mPAs, preferably from 10 to 300 mPas.
Chitosan derivatives and their preparation are also well known (Hirano, Ullmann's Encyclopedia of Industrial Chemistry, 2005, entry "Chitin and Chitosan"; Prashanth and Tharanathan, Trends Food Sci. Technol. 2007, 18, 117-131). They are prepared by reactions at the amino group (e.g. by N-acylation, formation of N-alkylidene and N-arylidene derivatives, N-alkylation and N-arylation) or at the hydroxy groups. Preferably, chitosan derivatives are prepared by reactions a the amino group.

The aqueous composition comprises a polymer selected from vinylidene chloride copolymer or chitosan. Vinylidene chloride copolymer and chitosan may be used mixed together or alone. Preferably, the polymer is either vinylidene chloride copolymer or chitosan. The aqueous composition may further comprise a surfactant. Suitable surfactants are defined below. The term "a surfactant" means one ore more surfactants.

In a preferred embodiment, the aqueous composition comprises a vinylidene chloride copolymer and a surfactant. Preferably, the surfactant is a nonionic surfactant. Typically, the aqueous compositions comprises 20 to 80 wt%, preferably 40 to 70 wt% and more preferably 50 to 65 wt% of aqueous emulsion of vinylidene chloride copolymer based on the total weight of the aqueous composition. In general, the aqueous compositions comprises 20 to 80 wt% of aqueous emulsion of vinylidene chloride copolymer and 0.01 to 10 wt%, preferably 0.1 to 4 wt% surfactant, based on the total weight of the aqueous composition.

In another preferred embodiment, the aqueous composition comprises chitosan, a surfactant and an organic acid. Preferably, the surfactant is a nonionic surfactant. Suitable organic acids include acetic acid, citric acid, lactic acid, malic acid, propionic acid and succinic acid. Preferably, the organic acid is acetic acid. Typically, the aqueous composition comprises 0.2 to 3 wt%, preferably 0.8 to 2.6 wt% chitosan. For example, the aqueous composition comprises 0.2 to 3 wt% chitosan, 0.1 to 1.0 wt% organic acid, and 0.02 to 0.1 wt% surfactant. The aqueous composition may further comprise additives, such as antifoaming agents or antimicrobial agents.

Suitable surfactants are alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ethers, ethoxylated isooctylphenol, octylphenol, nonylphenol, alkylphenol polyglycol ethers, tributylphenyl polyglycol ethers, tristearylphenyl polyglycol ethers, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

The treatment of seed comprises all suitable seed treatment techniques known in the art, such as seed dressing, seed coating, seed dusting, seed soaking and seed pelleting. Further examples are fluidized bed techniques, roller mill method, rotostatic seed treaters or drum coaters.

In step a) of the method according to the present invention seed is treated with a pesticide and an aqueous compositions comprising a polymer selected from vinylidene chloride copolymer or chitosan. The seed may be treated with a mixture of the pesticide and the aqueous composition, or in a two step process first with the pesticide and after that with the aqueous composition or vice versa. Preferably, the seed is first treated with the pesticide and after that with the aqueous composition. The application rates of the pesticide is generally from 0,1 g to 10 kg per 100 kg of seed, preferably from 1 g to 5 kg per 100 kg of seed, in particular from 1 g to 2,5 kg per 100 kg of seed. The recommendations of the producer of the pesticide should be considered. The application rate of the aqueous composition comprising the polymer is 0,01 I to 10 I per 100 kg of seed, preferably 0,05 I to 3 I per 100 kg of seed, and more preferably 0,1 I to 0,5 L per 100 kg of seed.

In step b) of the method according to the present invention the treated seed of step a) is dried. Drying is usually made by air drying at temperature from 10 to 80 °C, preferably 15 to 30 °C within 1 to 72 h, preferably 6 to 36 h. Typically, the water content of the dried seed is in the range of 1 to 20 wt%, preferably 5 to 15 wt% water based on the total weight of the dried seed. The dried seed can directly be sown.

The present invention also relates to the use of a polymer selected from vinylidene chloride copolymer or chitosan for increasing the number of seedlings per number of sowed grains of seed, wherein the seed has been treated with a fungicide or an insecticide. Suitable and preferred pesticides, polymers and seed are described above.

The present invention provides several advantages: The method is easy to follow on industrial scale with standard equipment. The seedling show the same or even better crop vigor compared to seed, which was only treated with pesticides or only with polymers. The number of seedlings per number of sowed grains of seed is even increased under stress, such as high temperature during germination, humidity during germination,or mechanical damage of the seed.
The seedlings show the same or even better resistance to plant diseases, such as fungi. The increased number of seedlings per number of sowed grains results in a higher crop yield, and thus an increased return on investment for the grower.

The invention is further illustrated but not limited by the following examples.

### Examples

| | |
|---|---|
| Pesticide A: | Liquid formulation of metalaxyl (28.35 wt% active), commercially available from Bayer CropScience as Allegiance® FL. |
| Pesticide B: | A flowable concentrate formulation (FS-type, that means liquid suspension for seed treatment) of pyraclostrobin (5 wt%) and thiophanate-methyl (45 wt%). |
| PVDC: | A milky aqueous composition (pH about 3) comprising 60 wt% of an aqueous emulsion of a vinylidene chloride/vinyl chloride/methyl acrylate copolymer (50 wt% dry weight), 38 wt% of water and 2 wt% of nonionic surfactant. |
| Chitosan: | An aqueous composition (pH about 5 to 6) comprising 2 wt% chitosan. The pH was adjusted using acetic acid. |

### Example 1

Soybean seed (1.0 kg) were pretreated with pesticide (126 ml Pesticide A and 1.0 ml Pesticide B) and/or polymer (1.44 ml PVDC or 1.8 ml Chitosan) as indicated in Table 1. Addionally, to all experiments 0.19 ml of blue seed colour was added. The treatment was done in a Hege 11 Seed Treater (Wintersteiger) at 21 °C. Seeds were placed in a treater container (4.5 liter capacity) and during the process, seeds were mixed by the rotation of a treating disc at 3000 rpm. The pesticide and/or polymer were added with a micropippete Pipetman. Next, the treated seed was dried overnight at room temperature (21 °C).

The dried treated seed were sown in natural soil and grown at 7.2 °C soil temperature and 13°C air temperature for 31 days. The number of seedlings was determined by manual counting 31 days after planting in growth stage 10 with the first true leaves just developing.

The results presented in table 1 clearly show, that the combined use of pesticide and polymer increased the germination compared to the single use of either pesticide or polymer.

**Table 1**

| Entry | Pesticide | Polymer | Seedlings per acre^{b)} | Germination^{c)} [%] |
|---|---|---|---|---|
| 1^{a)} | - | - | 89,908 | 57.3 |
| 2 | Pesticide A + Pesticide B | - | 130,506 | 83.2 |
| 3 | - | PVDC | 95,919 | 61.2 |
| 4 | - | Chitosan | 100,711 | 64.2 |
| 5 | Pesticide A + Pesticide B | PVDC | 137,563 | 87.7 |
| 6 | Pesticide A + Pesticide B | Chitosan | 139,741 | 89.1 |

| | | | | |
|---|---|---|---|---|
| a) Control experiment; seed treated without pesticide and without polymer. b) total number of sowed grains of seed was 156,900 per acre. c) number of seedlings per number of sowed grains of seed. | | | | |

## Claims

1. A method for increasing the number of seedlings per number of sowed grains of seed comprising
a) treating seed with a pesticide and an aqueous compositions comprising a polymer selected from vinylidene chloride copolymer or chitosan; and
b) drying said treated seed.

2. The method according to claim 1, wherein the pesticide is a fungicide or an insecticide.

3. The method according to claims 1 or 2, wherein the pesticide is a fungicide selected from strobilurins, carboxamides, azoles and organochlorine compounds.

4. The method according to claims 1 to 3, wherein the vinylidene chloride copolymer comprises the comonomers vinyl chloride, acrylic acid, alkyl acrylate, methacrylic acid and/or alkyl methacrylate.

5. The method according to claims 1 to 4, wherein the coating composition comprises a chitosan, an organic acid and a surfactant.

6. The method according to claims 1 to 4, wherein the coating composition comprises a vinylidene chloride copolymer and a surfactant.

7. The method according to claims 1 to 5, wherein the seed is seed of maize or soybean.

8. Use of a polymer selected from vinylidene chloride copolymer or chitosan for increasing the number of seedlings per number of sowed grains of seed, wherein the seed has been treated with a pesticide.

9. The use according to claim 8, wherein the pesticide is a fungicide selected from strobilurins, carboxamides, azoles and organochlorine compounds.

10. The use according to claim 8 or 9, wherein the pesticide is pyraclostrobin, thiophanate-methyl, metalaxyl, boscalid, triticonazol, imidachloprid and / or fipronil.

11. The use according to claims 8 to 10, wherein the seed is seed of maize or soybean.
